# EUROPEAN PATENT APPLICATION

(11) **EP 3 993 340 A1**
(43) Date of publication of application: **04.05.2022**
(21) Application number: 20306310.2
(22) Date of filing: 02.11.2020
(51) Int. Cl.: H04L 29/06, H02J 13/00, H04L 29/08, H04W 4/38, H04W 4/70, G06F 9/455

(54) **IOT GATEWAY FOR INDUSTRIAL CONTROL SYSTEMS, ASSOCIATED DEVICES, SYSTEMS AND METHODS**

(71) Applicant: Schneider Electric Industries SAS, 92500 Rueil-Malmaison (FR)
(72) Inventor: RAMOS PEÑUELA, Francisco, 38000 Grenoble (FR); ALVAREZ DE SOTOMAYOR GRAGERA, Amelia, 38000 Grenoble (FR)
(74) Representative: Lavoix

(57) **Abstract**

An electronic controller (10) for an industrial control system (4) comprises:
a first communication interface configured to be connected to at least one electrical device (6) of an electrical substation (2),
a second communication interface configured to be connected to an additional control and/or monitoring system (20),
a real-time database configured to store data exchanged with at least one electrical device of the electrical substation.

The electronic controller is configured to allow the additional control and/or monitoring system (20) to read data from said database and to prevent the additional control and/or monitoring system (20) from writing into said database.

## Description

### TECHNICAL FIELD

The present disclosure relates to industrial control systems and associated methods, and is especially applicable to electrical substations.

### BACKGROUND

Electrical substations are key elements of electrical transmission and distribution networks. They play a critical role in allowing electrical utilities to deliver electric power to their customers in a safe and reliable way.

Electrical substations usually comprise various electrical devices such as transformers and electrical switchgear devices connected to a power grid. Most electrical substations also comprise an industrial control system overseeing the operation of the substation in order to enable remote supervision and control of the substation.

Many commonly used industrial control systems, such as SCADA (Supervisory Control And Data Acquisition) systems, often have dedicated sensors, actuators, communication lines, programmable logic controllers, remote terminal units, and the like, interfacing with local equipment to allow remote control and monitoring of the substation through secure communication channels.

More recently, control and/or monitoring systems based on so-called "Internet of Things" (IoT) devices have been proposed to improve the operation of electrical substations by offering novel services, such as predictive maintenance services and real-time analytics.

For example, wireless sensor networks could be deployed in substations to gather data that cannot be accessed through existing industrial control systems. The gathered data is then sent to a remote server connected for further processing.

In some applications, the remote server could be advantageously interfaced with the industrial control system in order to gather data generated by the control devices and/or by the electrical devices, for example to enable a third-party service provider to provide services such as real time analytics.

However, interfacing loT systems with existing industrial control systems may raise significant security issues. One reason is that loT networked sensors and systems are permanently connected to public global telecommunication networks such as the Internet and often rely on software and online platforms provided by third-party vendors. On the other hand, electrical substations are strategic assets and they cannot be allowed to suffer outages, disruption, or data loss resulting from unauthorized access to the local industrial control system.

### SUMMARY

It is therefore desirable to provide solutions to interface third party systems with industrial control systems in electrical substations while preventing unauthorized access to data, resources and equipment by third parties.

An aspect of the invention relates to an electronic controller for an industrial control system, said electronic controller comprising:
a first communication interface configured to be connected to at least one electrical device of an electrical substation,
a second communication interface configured to be connected to an additional control system,
a real-time database configured to store data exchanged with at least one electrical device of the electrical substation,
wherein the electronic controller is configured to allow the additional control system to read data from said database and to prevent the additional control system from writing into said database.

In other embodiments, the invention may advantageously comprise one or more of the following technical features, considered alone or according to all possible technical combinations:
- the electronic controller is configured to implement a software application programming interface comprising a public method authorizing the additional control system to read data from the database.
- the electronic controller is configured to execute steps of:
   receiving a read request from the additional control system, said read request comprising a call to the application programming interface,
   accepting the read request,
   fetching the requested data from the database,
   sending the requested data to the additional control system.
- the electronic controller is further configured to implement a virtual machine configured to process read requests received from the additional control system.
- the electronic controller is a programmable logic controller.

According to another aspect, an electrical substation, comprises:
one or more electrical devices,
an industrial control system comprising an electronic controller according to any previous claim and a supervisory device, the electronic controller being connected to at least some of the electrical devices and to the additional control system.

According to another aspect, one or more wireless sensors are placed in the electrical substation and are configured to send data to the additional control system.

According to another aspect, a method comprises, by an electronic controller connected to one or more electrical device of an electrical substation:
receiving a read request from a additional control system, said read request comprising a call to the application programming interface,
accepting the read request,
fetching the requested data from the database,
sending the requested data to the additional control system.

### BRIEF DESCRIPTION OF THE DRAWINGS

The invention will be further understood upon reading the following description, provided solely as a non-limiting example, and made in reference to the appended drawings, in which:
Fig. 1 is a simplified block diagram of an electrical substation comprising an industrial control system according to embodiments of the invention;
Fig. 2 is a block diagram of an industrial control system of an electrical substation according to an embodiment;
Fig. 3 is a block diagram of an industrial control system of an electrical substation according to another embodiment;
Fig. 4 is a flow chart depicting an exemplary method of operation implemented by the industrial control system of Fig. 2.

### DETAILED DESCRIPTION OF SOME EMBODIMENTS

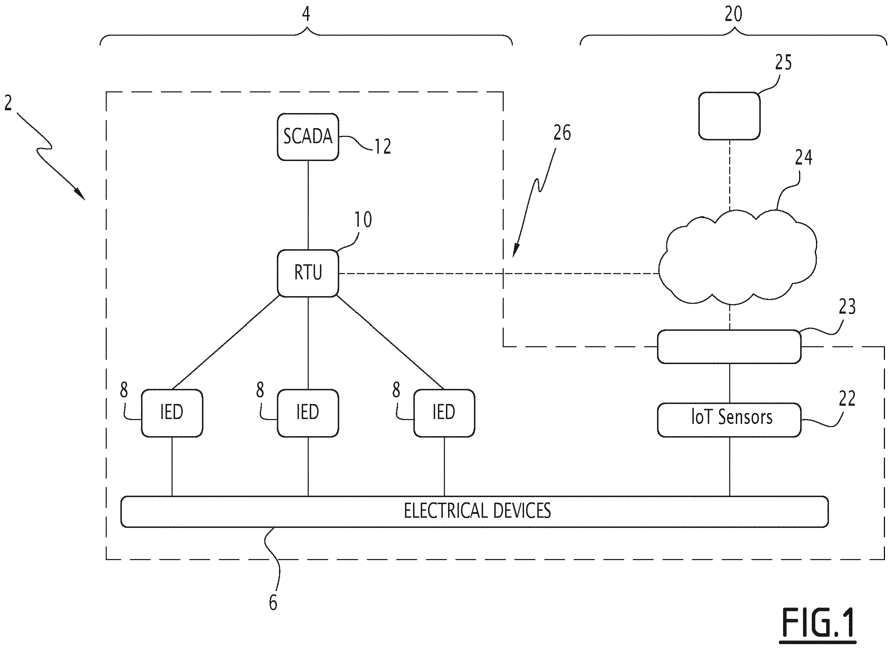

Figure 1 illustrates an exemplary electrical substation 2 comprising an industrial control system 4 and a plurality of electrical devices 6.

In many embodiments, the electrical devices 6 are configured to perform one or more functions related to the distribution of electrical power, such as interrupting electrical currents, transforming or converting electrical voltages and currents, modifying attributes (such as amplitude or frequency) of electrical voltages and currents, selectively providing reactive power, measuring electrical values, and the like.

The electrical devices 6 may be connected to a power grid. For example, at least some of the electrical devices 6 are interfaced with one or more power lines, such as medium voltage (MV) power lines.

For example, the electrical devices 6 may include voltage transformers, power factor compensation (PFC) devices, electrical switchgear devices such as breakers or switches or relays, or any suitable electrical power management system.

In many embodiments, the electrical devices 6 may be outfitted with one or more sensor, such as voltage sensors, current sensors, power meters, temperature sensors, sensors configured to measure an internal state (such as a position of a moving part) of the electrical device, and more generally, any sensor capable of measuring relevant physical or environmental values.

The industrial control system 4 is coupled to at least some of the electrical devices 6 in order to automatically oversee the operation of the substation 2, for example to enable remote supervision and control of the substation 2.

The electrical devices 6 may be actuators (e.g., they perform one or more functions in response to a command issued by the control system 4) and/or sensors (e.g., they generate and send data to the control system 4).

In many embodiments, the industrial control system 4 is a SCADA system.

For example, as shown in the exemplary embodiment of Figure 1, the control system 4 may comprise one or more control devices 8 such as Intelligent Electrical Devices (IED), a main controller 10 and a supervisory device 12.

For example, each device 8 is an electronic controller configured to be associated to (e.g., directly interfaced with) one or more electrical devices 6, said controller 8 being configured to receive data and/or issue commands to the connected electrical device(s) 6.

Each device 8 is further connected to the main controller 10 and is preferably configured to forward data to the controller 10 and/or receive, from the controller 10, data and/or command signals to be relayed to one or more devices 6.

In some embodiments, one or more electrical devices 6 may comprise embedded control circuitry similar to the controller 8. Thus, said devices 6 may be directly interfaced with the main controller 10. In other words, some electrical devices 6 may be connected directly to the controller 10, and some other electrical devices 6 could be connected to the main controller 10 through a control device 8.

The main controller 10 may comprise electronic circuitry configured to perform various operations, and may include a processor and a memory device (or any suitable non-transitory computer readable data storage media).

The memory device has program instructions or computer code stored therein for automatically performing one or more of the functions described herein when said program instructions or computer code are executed by the processor.

For example, the processor is a generic processor, such as a microprocessor or a microcontroller, or a specific purpose processor such as a digital signal processor (DSP) or a graphical processor unit (GPU). In alternative embodiments, one or more functions of the controller 10 could be implemented by an application-specific integrated circuit (ASIC) or by a field-programmable gate array (FPGA), or by analog circuitry.

For example, the controller 10 is a programmable logic controller (PLC) or a remote terminal unit (RTU).

In preferred embodiments, the electrical devices 6 and the control devices 8 are connected to the main controller 10 through wired communication links, such as electrical cables or through a data communication bus.

In many embodiments, the supervisory system 12 is based on site or based in a remote location, and comprises a computer server or a computer workstation connected to the main controller 10, preferably through a secure communications link.

As visible on Figure 1, an additional control and/or monitoring system 20 (also named "loT system" in what follows) is associated to the electrical substation 2.

The additional control and/or monitoring system 20 comprises a wireless sensor network comprising one or more wireless sensors 22. Preferably, at least some of the wireless sensors 22 are deployed in the substation 2.

For example, the sensors 22 are able to measure physical and/or environmental conditions in the substation 2 and to collect data relating to the operation of the electrical devices 6, such as electrical voltages, currents, power, power factor values, temperatures, or the like.

The sensors 22 are in communication with a remote software platform 24 through telecommunications networks such as the internet, or a low power wide area network, or the like.

In practice, the remote software platform 24 is hosted on a remote computer server and may be provided as a cloud-based software service. The remote software platform 24 may be configured to process data collected by the sensors 22, for example to provide real time analytics of the operating condition of the substation 2. In what follows, the remote software platform 24 may be referred to as "remote server 24".

In many embodiments, the sensors 22 may be wirelessly connected to a local communication gateway device 23 connected to the remote server 24. Data is exchanged between the sensors 22 and the remote server 24 through the local communication gateway device 23.

In some examples, the remote server 24 can be accessed by a client device 25, such as a cell phone, or a digital tablet, or a computer, or any appropriate computing device.

In some alternative embodiments, the sensors 22 could be omitted. For example, the additional system 20 (and/or the remote server 24) may be interfaced with the industrial control system 4 only to gather data generated by the control devices and/or by the electrical devices 6. This setup could, for example, be used to gather data measured by the control system 4 (such as temperature values or the like), for example to enable a third-party service provider to provide services such as real time analytics, without having to add dedicated sensors for this purpose.

In most embodiments, the additional system 20 is independent from the control system 4. For example, the additional system 20 operates independently from the control system 4. Preferably, the communications link used by the control system 4 to communicate with the remote server or workstation 12 is different from the communications link established between the sensors 22 and the software platform 24.

In many embodiments, the remote software platform 24 is able to access and collect data collected or stored by the control system 4. For example, the main controller 10 is communicatively coupled to the remote software platform 24, through a communication link 26, such as the internet.

In practice, the main controller 10 may be connected to the local communication gateway device 23, although a direct connection to the remote server 24 can also be envisioned, as illustrated in Figure 1.

For example, the main controller 10 comprises a first communication interface, for connecting one or more electrical devices 6, and a second communication interface, for connecting the remote software platform 24.

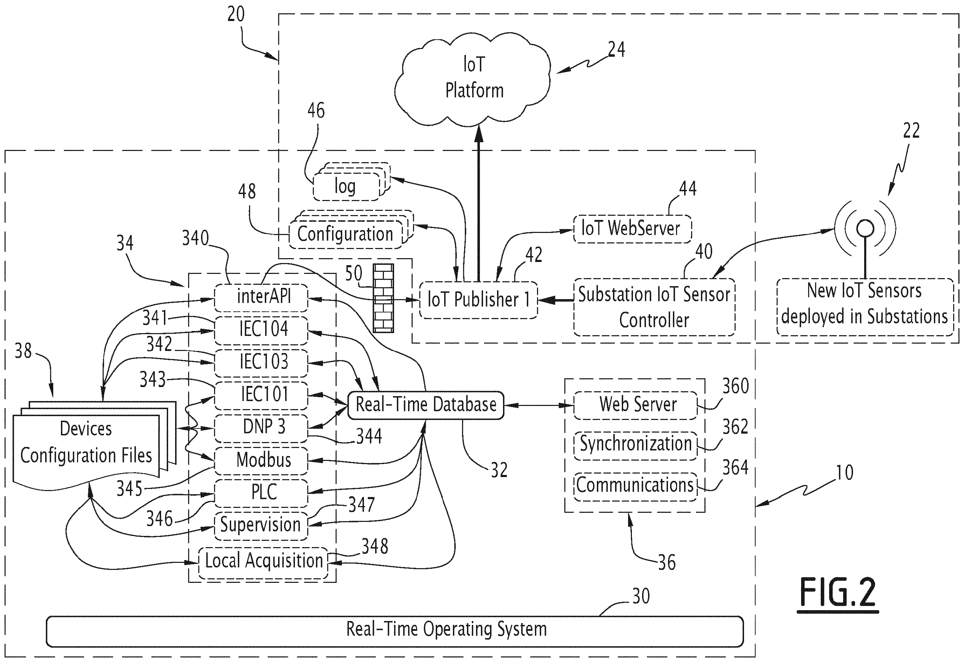

As shown on the block diagram of Figure 2, the main controller 10 is configured to implement a real-time operating system 30 and a real-time database 32.

The real-time database 32 is configured to store data associated to the connected electrical devices 6, such as data gathered from the electrical devices 6, and/or data describing the internal state of one or more electrical devices 6, and/or data meant to be sent to electrical devices 6 (such as command signals or data collected from other electrical devices 6).

In other words, the database 32 centralizes all real-time data generated and/or consumed by the connected electrical devices 6 during operation of the substation 4.

The controller 10 is also configured to implement an interface 34 for exchanging data with the connected electrical devices 6, said interface 34 being coupled to the database 32.

In the illustrated exemplary embodiment, the controller 10 is able to be interfaced to electrical devices 6 (eventually through controllers 8) through a wide range of physical media and industrial communication protocols. Thus, the interface 34 may comprise one or more interface modules (also named device modules) each adapted to handle communication with at least one connected electrical device 6 according to a predefined communication protocol. The interface modules are numbered 341 through 348in the example illustrated on Figure 2.

For example, said industrial communication protocols may include at least one of the following protocols and technologies: IEC standards such as IEC60870-5-101, IEC60870-5-103 or IEC60870-5-104, Modbus, Ethernet, Industrial Ethernet, DNP3, or the like.

The interface 34 can also be adapted (for example through local acquisition module 348) to accommodate electrical devices 6 that are connected to the module 10 through a non-standard or proprietary physical media or protocol (such as module 347 in the illustrated example).

For example, the interface modules 341-348 are implemented in the main controller 10 by suitable software code executed by the operating system 30 and/or by electronic circuitry.

Configuration files 38 may be stored in a memory of the main controller 10. The configuration files 38 may be used to define configuration parameters and options related to the electrical devices 6 (e.g., to define a list of connected devices 6, and/or to define parameters of the communication links between the devices 6 and the controller 10).

For example, the modules 341-348 may read the device configuration files 38 in order to establish and operate the communication link between the main controller 10 and the electrical devices 6.

In some examples, a configuration file 38 is defined for each module 341-348, or for each device 6. The configuration files 38 may be structured computer files, such as XML files (Extensible Markup Language), or JSON files (Javascript Object Notation), or any appropriate data structure.

It is to be understood that the embodiments described above are given for illustrative purposes only, and that in practice the interface 34 could be implemented differently. For example, the interface 34 could be compatible with only some of the aforementioned protocols and technologies, or with other protocols and technologies. A different number of protocols could be used.

In exemplary embodiments, the database 32 centralizes, in real time, the information exchanged between the connected electrical devices 6 and the control system 4.

For example, each entry of the database 32 may correspond to an abstracted entity capable of generating data and/or consuming data (e.g., a sensor generates data, and an actuator consumes data, such as set point values or command signals).

Said abstracted entity may, for example, correspond to an electrical device 6, or to a sensor coupled to said electrical device 6, or to an actuator coupled to said electrical device 6. An electrical device 6 connected to the control system 4 can be represented by one or more entries in the database if said electrical device 6 comprises one or more sensors or actuator.

The information (or data) stored in each entry in the database may include set point values and/or command signals (such as a command to close or open a switchgear device) and/or measured values (for example, values of physical or electrical conditions measured by sensors). The data may also comprise a source address or a destination address for addressing the device on the corresponding communication link, and/or an identifier for identifying of the corresponding entity or device.

Preferably, writing and reading access to the database 32 is controlled by the interface 34. Thus, the database 32 can be seamlessly updated in real time with information exchanged between the different electrical devices 6 over the different communication links.

According to aspects of the invention, the interface 34 is configured to provide an advanced programming interface (API) 340 configured to allow a third party entity (such as the additional system 20, or the remote server 24) to request data from the database 32, while preventing said third party entities from writing data into the database 32.

In other words, the advanced programming interface 340 acts as a gateway for interfacing third-party entities and provides only read access to the database 32.

The advanced programming interface 340 is, for example, implemented by program code executed by the processor of the controller 10.

In many embodiments, the advanced programming interface 340 comprises one or more public functions or methods adapted to be called from the additional system 20, for example from applications (such as IoT related applications) running on the controller 10 and/or on the remote platform 24. Said public functions or methods are configured to interact with the database 32, for example through internal private functions and/or methods implemented in the advanced programming interface.

Most notably, the advanced programming interface 340 is devoid of (i.e., does not comprise) any public function or method for writing data in the database 32.

In some optional embodiments, the advanced programming interface 340 may be configured to grant read access to only some part of the data stored in the database 32, e.g. by providing public functions and/or methods configured to give access only to some specific data stored in the database 32. This selective access could be defined based on a security policy defined by an administrator of the control system 4, and/or based on security credentials provided by the additional system 20.

In conclusion, the advanced programming interface 340 protects the contents of the database 32 from unauthorized interference from third party systems and/or vendors. Said third party systems and/or vendors are nonetheless able to read data from the database 32, to an extent allowed by the administrator of the system 2. Thus, the additional system 20 can be safely interfaced with the industrial control system 4.

In some optional embodiments illustrated on the example of Figure 2, the controller 10 may be further configured to implement a user interface 36 for allowing a trusted user to access at least some of the data stored in the database 32. For example, the user interface 36 may comprise a web server 360, as well as various functions to support the operation of the web server 360, such as synchronization 362 and communication 364 functions. The user interface 36 can be omitted in most embodiments.

In many exemplary embodiments, the additional system 20 comprises a software application 42, configured to run the operating system 30 of the main controller 10. The application 42 may configured to request read access to the database 32 in order to acquire data stored in the database 32 and send at least some of the acquired data to the remote software platform 24.

In practice, the application 42 may be developed by third party vendors with the purpose of interacting with the remote server 24 and, where applicable, with the sensors 22.

In the illustrated exemplary embodiment, the additional system 20 comprises an acquisition interface 40 configured to connect the wireless sensors 22 to the software application 42. In instances where sensors 22 are not deployed in the substation 2, the interface 40 could be omitted.

The application 42 may be further configured to interact with various services and elements provided by the additional system 20, such as a webserver 44, and may be configured to generate log files 46 and/or read configuration files 48, these examples being given only for non-limiting exemplary purposes. It is to be noted that different architectures capable of achieving similar purposes could be used instead in alternative embodiments. For example, the application 42 could be omitted.

Due to the implementation of the read-only functions in the advanced programming interface 340, the application 42 (and more generally the additional system 20) is unable to write data in the database 32 (this is depicted by the barrier symbol 50 on Figure 2).

In some embodiments, the application 42 may also be prevented from reading some data stored in the database 32, as explained previously.

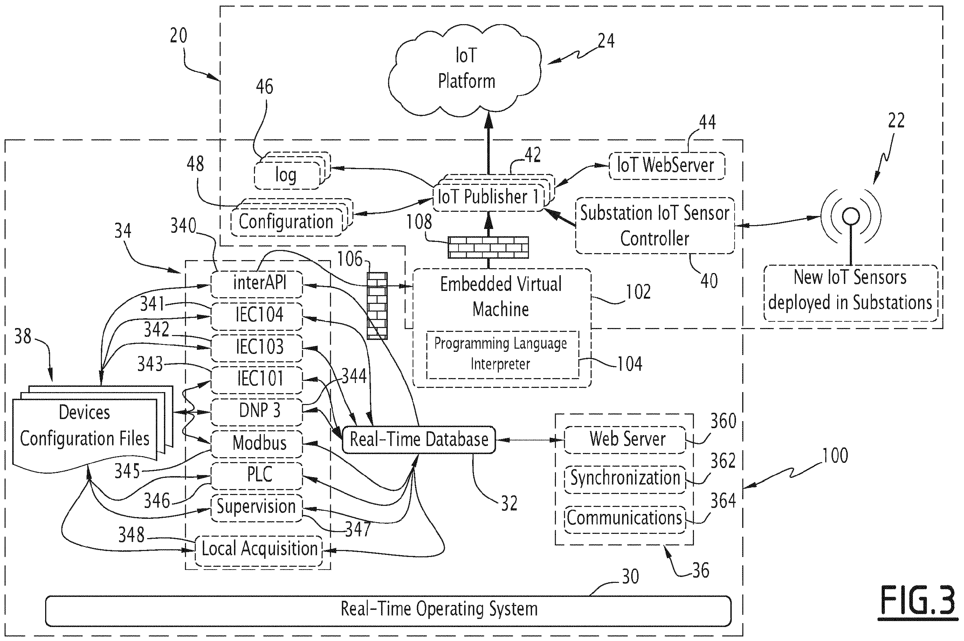

Another embodiment of the main controller 10 is described in reference to Figure 3.

In this example, a main controller 100 suitable for use in the control system 4 is similar to the previously described main controller 10. The main controller 100 is further configured to implement an embedded virtual machine 102 comprising a programming language interpreter 104 capable of running one or more software applications.

For example, the virtual machine 102 is accessible from both the gateway software layer 340 and the remote software platform 24. The read requests received from the remote software platform 24 are processed in the virtual machine 102. Preferably, said read requests are processed only in the virtual machine 102.

Thus, the remote software platform 24 is prevented from accessing other parts of the main controller 10. Remote requests can be monitored more easily, and unauthorized requests may be more effectively denied. Furthermore, the execution of remote requests in the controlled execution environment of the virtual machine 102 is the less likely to disrupt the normal operation of the main controller 10.

For example, using a virtual machine 102 can prevent malicious code sent by a third party entity through the remote server 24 from acting on the data exchanged between the electrical devices 6 and the control system 4. This also facilitates the integration of commercial IoT libraries, since the virtual machine 102 can provide a standardized environment independent from the architecture of the controller 10 and of the operating system 30.

Thus, in this embodiment, the contents of the database 32 are even more protected from unauthorized interference emanating from the additional control system 20 (as illustrated by the symbols 106 and 108 on Figure 3).

Aside from these differences, the operation of the main controller 100 is similar or identical to the operation of embodiments of the main controller 10.

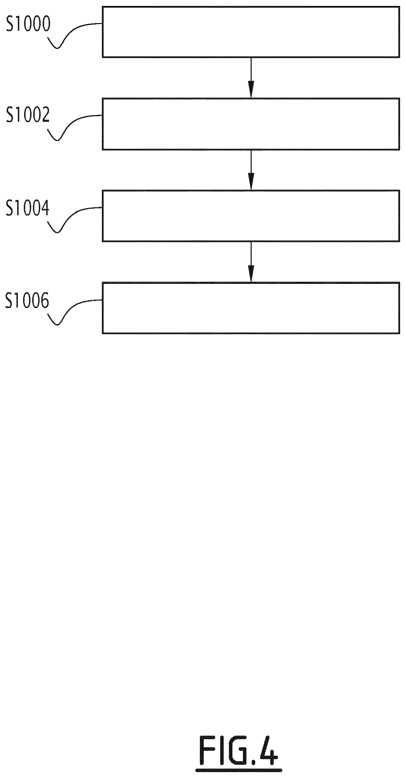

An exemplary method of operation of the controller 10 is now described in reference to Figure 4. For example, the program code stored in memory of the main controller 10 causes the processor to execute the following steps.

At block S1000, a read request is received by the controller 10 from the additional system 20, for example from the remote server or from the application 42. For example, the read request comprises a call to the application programming interface 340.

At block S1002, the read request may be analyzed by the interface 340 to determine whether it is allowable or not. In the illustrated example, the read request is accepted by the controller 10.

In response, at block S1004, the controller 10 retrieves the requested data from the database, for example by calling internal private functions and/or methods of the interface 340 that are responsible for interacting with the database 32.

At block S1006, the requested data is transmitted to the additional system 20 (e.g., is sent to the remote server 24 or to the application 42).

In other embodiments, the method steps described above could be executed in a different order. One or several method steps could be omitted or replaced by equivalent steps, or combined or dissociated into different method steps. The disclosed exemplary embodiment is not intended to be limiting and does not prevent other methods steps to be executed without departing from the scope of the claimed subject matter.

The embodiments and alternatives described above may be combined with each other in order to create new embodiments.

The project leading to this patent application has received funding from the European Union's Horizon 2020 research and innovation programme under grant agreement Nº 731211.

## Claims

**1.** An main electronic controller (10, 100) for an industrial control system (4), said electronic controller comprising:
a first communication interface configured to be connected to at least one electrical device (6) of an electrical substation (2),
a second communication interface configured to be connected to an additional control and/or monitoring system (20),
a real-time database (32) configured to store data exchanged with at least
one electrical device of the electrical substation,
wherein the electronic controller is configured to allow the additional control and/or monitoring system (20) to read data from said database and to prevent the additional control and/or monitoring system (20) from writing into said database.

**2.** The electronic controller of claim 1, wherein the electronic controller is configured to implement a software application programming interface (340) comprising a public method authorizing the additional control and/or monitoring system (20) to read data from the database.

**3.** The electronic controller according to claim 2, wherein the electronic controller (10, 100) is configured to execute steps of:
receiving (S1000) a read request from the additional control and/or
monitoring system (20), said read request comprising a call to the application programming interface,
accepting (S1002) the read request,
retrieving (S1004) the requested data from the database,
sending (S1006) the requested data to the additional control and/or
monitoring system (20).

**4.** The electronic controller according to any previous claim, wherein the electronic controller (100) is further configured to implement a virtual machine (102) configured to process read requests received from the additional control and/or monitoring system (20).

**5.** The electronic controller according to any previous claim, wherein the electronic controller (10, 100) is a programmable logic controller.

**6.** An electrical substation (2), comprising:
one or more electrical devices (6),
an industrial control system (4) comprising an electronic controller (10, 100) according to any previous claim and a supervisory device, the electronic controller being connected to at least some of the electrical devices and
interfaced with the additional control and/or monitoring system (20).

**8.** The electrical substation of claim 7, wherein one or more wireless sensors (22) are placed in the electrical substation and are configured to send data to the additional control and/or monitoring system (20).

**9.** A method, comprising, by an electronic controller (10, 100) connected to one or more electrical devices (6) of an electrical substation:
receiving (S1000) a read request from an additional control and/or
monitoring system (20), said read request comprising a call to the application programming interface,
accepting (S1002) the read request,
retrieving (S1004) the requested data from the database,
sending (S1006) the requested data to the additional control and/or
monitoring system (20).
